# EUROPEAN PATENT APPLICATION

(11) **EP 1 304 654 A1**
(43) Date of publication of application: **23.04.2003**
(21) Application number: 01926127.0
(22) Date of filing: 02.05.2001
(51) Int. Cl.: G06T 13/00

(54) **IMAGE INFORMATION PROCESSING DEVICE, IMAGE INFORMATION PROCESSING METHOD, IMAGE INFORMATION PROCESSING PROGRAM, AND RECORDED MEDIUM ON WHICH IMAGE INFORMATION PROCESSING PROGRAM IS RECORDED**

(30) Priority: 31.05.2000 JP 2000163265
(71) Applicant: Sharp Kabushiki Kaisha, Osaka-shi, Osaka 545-8522 (JP)
(72) Inventor: MATSUYAMA, Tetsuya, Yamatokoriyama-shi, Nara 639-1008 (JP)
(74) Representative: Müller - Hoffmann & Partner
(86) International application number: JP0103813
(87) International publication number: WO01093205

(57) **Abstract**

In an animated email communications device (1) in accordance with the present invention, animation data transmitted over a network from an origin is received by a receiving section (11) and stored in an incoming animation storage section (12), and animation data produced in advance is stored in an added animation storage section (13). As the user starts editing by an operation of an input section (15), an animation display appears on a display section (14) based on the animation data stored in the incoming animation storage section (12). In this operation, if the operator gives an insertion or superimpose instruction through the input section (15), the editing section (16) inserts or superimposes the animation stored in the added animation storage section (13) with no delay. At the end of the editing, the edited animation data is stored in a reply animation storage section (17) and transmitted to a destination from a transmitting section (18) when the operator gives an instruction through the input section (15). Thus, an image, such as animation, can be edited by, for example, insertion and superimposition, as easily and quickly as editing an email reply.

## Description

### Technical Field

The present invention relates to graphic data processing devices, graphic data processing methods, graphic data processing programs, and storage media which stores a graphic data processing program, and specifically, those suitably applied to computer-based animation production and editing.

### Background Art

Various techniques are currently in common use in the field of computer-based animation production and editing. According to one of methods, for example, frames are produced from individual sets of two-dimensional bitmap data and drawn in prescribed order to produce an animation display. Another method is to only prepare key frames in advance and create those images between the key frames by interpolation to actually produce an animation display. Another example is to prepare motion (running, stopping) data of humans, cars, and other objects in advance and combine various motions of the objects based on data that represents sequential motions to display animation images.

Meanwhile, email has become a popular mode of communication owing to growing use of information processing devices, such as personal computers, and mobile phones with an email transmission function. Further, increased capability for bulk data transmission, reduced communications cost, enhanced performance of devices, and an increased number of skilled users among other factors is pushing the popularity to a point where people enjoy not only text-based email messages, but graphic data attachments too.

Japanese Publication of Unexamined Patent Application No. 2000-59857 (Tokukai 2000-59857; published on 25 February 2000) discloses animation as an example of a graphic data attachment to an email message. The prior art document describes a technology which synthesizes a character image of the user with a character image received from another end to produce a display picture, which gives the user a feeling that the character images were talking to each other.

In typical cases of email communications, the user can quote a received email message for editing to write a reply. Using this function, the user can easily prepare a reply message for an incoming message that covers more than one topic, for example, by inserting after, each topic, his/her remarks, comments, or interjections.

However, in cases like the one described in the prior art document in which the users want to communicate with each other by means of an email attachment that contains animation or another form of image, it is difficult to edit a received image for retransmission. An entire text-based message can be viewed at a time, allowing the user to easily specify where to insert remarks and comments, so long as the display area is sufficiently large. In contrast, animation is temporally continuous and cannot be viewed in entirety at a time; inserting images in whatever form during the animation is far more difficult than editing text-based email messages.

The foregoing animation production and editing technology therefore does not provide the same level of ease and convenience in the production/editing of animation as a reply as in the preparation of a text-based reply message. The situation is aggravated with a device, like a mobile phone, which only offers a limited user interface. The prior art technology disclosed in Tokukai 2000-59857 mentioned above synthesizes character images for a display in real time and is not suitable to apply to the editing of animation data that extends over a period of time.

The present invention has an objective to offer a graphic data processing device, a graphic data processing method, a graphic data processing program, and a storage medium which stores the graphic data processing program, to edit a received image by inserting or superimposing an image at any desired timing and position through simple operation.

### Disclosure of the Invention

A graphic data processing device in accordance with the present invention is characterized in that it includes:
first storage means for storing a first graphic data set produced in advance;
receiving means for receiving a graphic data set over a network;
second storage means for storing a second graphic data set received by the receiving means;
input means for receiving an input from the operator;
display means for displaying a graphic data set from the second storage means; and
edit means for inserting or superimposing the first graphic data set to the second graphic data set at an on-screen position designated through the input means and at a time when the input means receives an input while the display means is displaying the second graphic data set, so as to cause the display means to produce a display.

With the structure, the first graphic data set can be inserted or superimposed to any temporal or positional part of the second graphic data set received over a network as designated through the input means. An image can be thereby edited as easily and quickly as an email reply.

A graphic data processing device in accordance with the present invention is characterized in that it includes:
first storage means for storing a first time-series graphic data set produced in advance;
receiving means for receiving a time-series graphic data set over a network;
second storage means for storing a second time-series graphic data set received by the receiving means;
input means for receiving an input from the operator; and
edit means for carrying out an operation to insert or superimpose the first time-series graphic data set to the second time-series graphic data set,
wherein
the edit means produces a third time-series graphic data set by carrying out the operation at a point in time in the second time-series graphic data set as designated by the input made through the input means.

With the structure, the first storage means stores therein the first time-series graphic data set produced in advance and the second storage means stores therein the second time-series graphic data set received by the receiving means. The operator can carry out an operation to insert or superimpose the first time-series graphic data set at a point in time by designating the point in time in the second time-series graphic data set through the input means. Therefore, when a time-series graphic data set is received, the operator can easily produce a time-series graphic data set as a reply by quoting the received time-series graphic data set.

A method of processing graphic data in accordance with the present invention is characterized in that it includes the steps of:
storing a first graphic data set produced in advance;
storing a second graphic data set received over a network;
displaying the second graphic data set; and
in response to an input operation, inserting or superimposing the first graphic data set to the second graphic data set at an on-screen position designated by an input operation to produce a display.

With the method, the first graphic data set can be inserted or superimposed to any temporal or positional part of the second graphic data set received over a network as designated through the input means. An image can be thereby edited as easily and quickly as an email reply.

A method of processing graphic data in accordance with the present invention is characterized in that it includes the steps of:
storing a first time-series graphic data set produced in advance;
storing a second time-series graphic data set received over a network; and
in response to an input operation, inserting or superimposing the first graphic data set at a point in time in the second time-series graphic data set as designated by the input operation to produce a third time-series graphic data set.

With the method, the first time-series graphic data produced in advance is stored, and the second time-series graphic data received by the receiving means is stored. The operator can carry out an operation to insert or superimpose the first time-series graphic data set at a point in time by designating the point in time in the second time-series graphic data set by an input operation. Therefore, when the time-series graphic data is received, the operator can easily produce a time-series graphic data set as a reply by quoting the received time-series graphic data set.

For a fuller understanding of the nature and advantages of the invention, reference should be made to the ensuing detailed description taken in conjunction with the accompanying drawings.

### Brief Description of the Drawings

Figure 1 is a block diagram showing a functional structure of an animated email communications device which is a graphic data processing device of embodiment 1 in accordance with the present invention.
Figure 2 is a drawing showing, as an example, received animation which is to be edited in embodiment 1 in accordance with the present invention.
Figure 3 is a drawing showing, as an example, animation which is prepared in advance and to be added by editing in embodiment 1 in accordance with the present invention.
Figures 4(a) and 4(b) are drawings illustrating animation and data when the object data in the animation of Figure 2 is produced from two-dimensional bitmap data.
Figures 5(a) and 5(b) are drawings illustrating animation and data when the object data in the animation of Figure 3 is produced from two-dimensional bitmap data.
Figures 6(a) and 6(b) are drawings illustrating animation and data as an example of superimposition of the animation in Figures 5(a), 5(b) onto the animation in Figure 4(a), 4(b).
Figures 7(a) and 7(b) are drawings illustrating animation and data as another example of superimposition of the animation in Figures 5(a), 5(b) onto the animation in Figures 4(a), 4(b).
Figures 8(a) and 8(b) are drawings illustrating animation and data when the data for the object in the animation of Figure 2 is produced only for key frames.
Figures 9(a) and 9(b) are drawings illustrating animation and data when the data for the object in the animation of Figure 3 is produced only for key frames.
Figures 10(a) and 10(b) are drawings illustrating animation and data as an example of superimposition of the animation in Figures 9(a), 9(b) onto the animation in Figures 8(a), 8(b).
Figures 11(a) and 11(b) are drawings illustrating animation and data as am example of insertion of the animation in Figures 5(a), 5(b) into the animation in Figures 4(a), 4(b).
Figure 12 is a flow chart describing editing procedures for animation of embodiment 1 in accordance with the present invention.
Figure 13 is a block diagram showing a functional structure of an animated email communications device of embodiment 2 in accordance with the present invention.
Figure 14 is a drawing showing, as an example, received animation which is to be edited in embodiment 2 in accordance with the present invention.
Figure 15 is a drawing showing, as an example, animation after editing in embodiment 2 in accordance with the present invention.
Figure 16 is a drawing showing, as an example, a structure of data which is to be transmitted in embodiment 2 in accordance with the present invention.
Figure 17 is a block diagram showing a functional structure of an animated email communications device of a transmitting end of embodiment 2 in accordance with the present invention.
Figure 18 is a flow chart describing editing procedures for animation of embodiment 2 in accordance with the present invention.
Figure 19 is a drawing showing, as an example, animation which is to be synthesize with text.
Figure 20 is a drawing illustrating operations of an animated email communications device of embodiment 3 in accordance with the present invention.
Figure 21 is a block diagram showing a functional structure of the animated email communications device in Figure 20.
Figure 22 is a drawing showing, as a concrete example, differential data used in embodiment 3 in accordance with the present invention.
Figure 23 is a drawing illustrating operations of an animated email communications device of embodiment 4 in accordance with the present invention.

### Best Modes for Carrying Out the Invention

### [Embodiment 1]

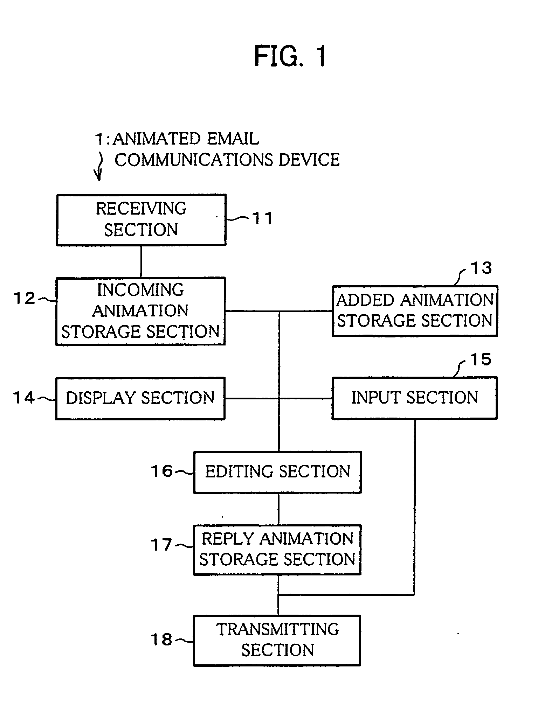

The following will describe an embodiment of the present invention in reference to Figures 1-12.

Figure 1 is a block diagram showing a functional structure of an animated email communications device 1 which is a graphic data processing device of the present embodiment. The animated email communications device 1 is realized by an animated email communications program is executed by a personal computer, mobile data terminal, or other data processing device. The data processing device, equipped with, for example, a CPU (Central Processing Unit) and RAM (Random Access Memory), executes the animated email communications program by loading the program to the RAM for operation by the CPU.

For example, in a personal computer, the animated email communications program becomes ready for execution as it is read from one of a variety of storage media including CD-ROMs and floppy (trademark) disks or a nonvolatile memory, such as an internal hard disk, on which the program is installed or alternatively over a communications network, such as the Internet or LAN (Local Area Network). Another example is a mobile data terminal in which the animated email becomes ready for execution as it is read from a nonvolatile memory, such as a flash EEPROM, in which the program is installed or alternatively over a communications system, such as a wireless or wired communications network.

The animated email communications device 1 includes a receiving section 11, an incoming animation storage section 12, an added animation storage section 13, a display section 14, an input section 15, an editing section 16, a reply animation storage section 17, and a transmitting section 18.

The receiving section 11 and the transmitting section 18 are provided as a communications interface in the animated email communications device 1. Examples of such a communications interface include a communications COM port, modem, TA (Terminal Adaptor), LAN card, wireless antenna device.

The incoming animation storage section 12, the added animation storage section 13, and the reply animation storage section 17 are provided as storage means in the animated email communications device 1. The storage means is realized by a RAM to execute the program and by a hard disk, flash EEPROM, or other nonvolatile memory to store the data.

The display section 14 provides a means to present a display related to operations of the animated email communications device 1, being a CRT (Cathode-ray Tube) or LCD (Liquid Crystal Display) in a personal computer and a LCD or organic EL (Electroluminescence) display in a mobile data terminal for example.

The input section 15 provides an input means to the animated email communications device 1, being a keyboard, a pointing device, such as a mouse, and various buttons.

The editing section 16 is a block realized by the execution of the animated email communications program and will be described later in detail in terms of operations.

The blocks in Figure 1 operate in tandem with the benefit of the animated email communications program, OS (Operating System), and the like.

Animation data, transmitted over a communications network from a sender, is received by the receiving section 11 and stored by the incoming animation storage section 12. The added animation storage section 13 stores the animation data produced by the operator and that produced in advance and downloaded over a communications network.

As the user starts editing by an operation of the input section 15, an animation display appears on the display section 14 based on the animation data stored in the incoming animation storage section 12. In this operation, if the operator gives an insertion or superimposition instruction through the input section 15, the editing section 16 inserts or superimposes the animation stored in the added animation storage section 13 into or onto the animation stored in the incoming animation storage section 12. At the end of the editing, the animation data edited by the editing section 16 is stored in the reply animation storage section 17. In response to a transmission instruction from the operator through the input section 15, the animation data stored in the reply animation storage section 17 is transmitted to the original sender via the transmitting section 18.

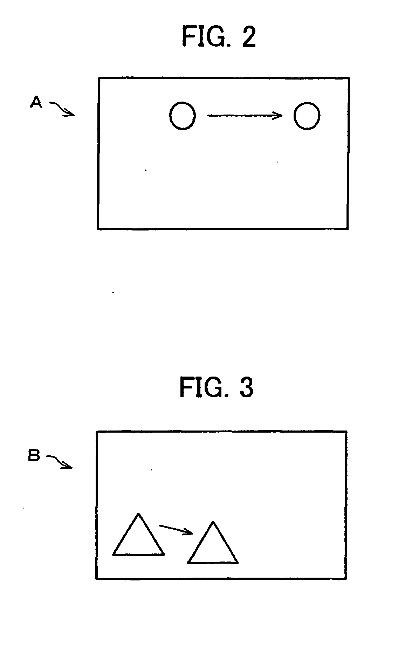

Concrete procedures will now be described for the foregoing editing operation in reference to Figures 2-11(b). Suppose that the incoming animation is animation A shown in Figure 2 in which a circle moves on screen from left to right and also that the animation to be added is animation B shown in Figure 3 in which a triangle moves on screen from left to right. Figures 2 and 3, although each constituted by a single image, represent motion that occur in animations A, B over a period of time 1.

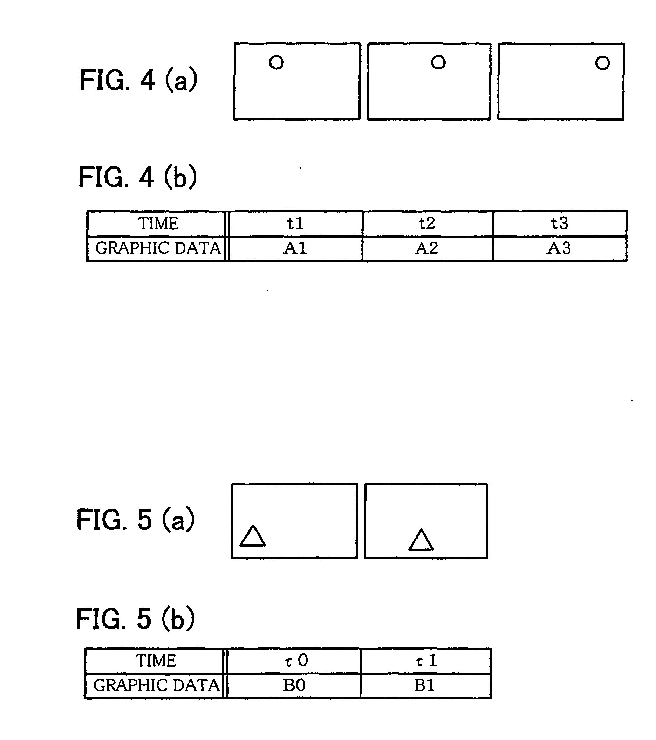

Incoming animation A is made up of multiple two-dimensional images arranged in the order in which the images are drawn as shown in Figure 4(a). The data for animation A is adopted so that a display is produced from object data sets A1, A2, A3 at times t1, t2, t3 respectively as shown in Figure 4(b).

As with animation A, animation B to be added is made up of multiple two-dimensional images arranged in the order in which the images are drawn as shown in Figure 5(a). The data for animation B is adopted so that a display is produced from object data sets B0, B1 at times τ0, τ1 respectively as shown in Figure 5(b).

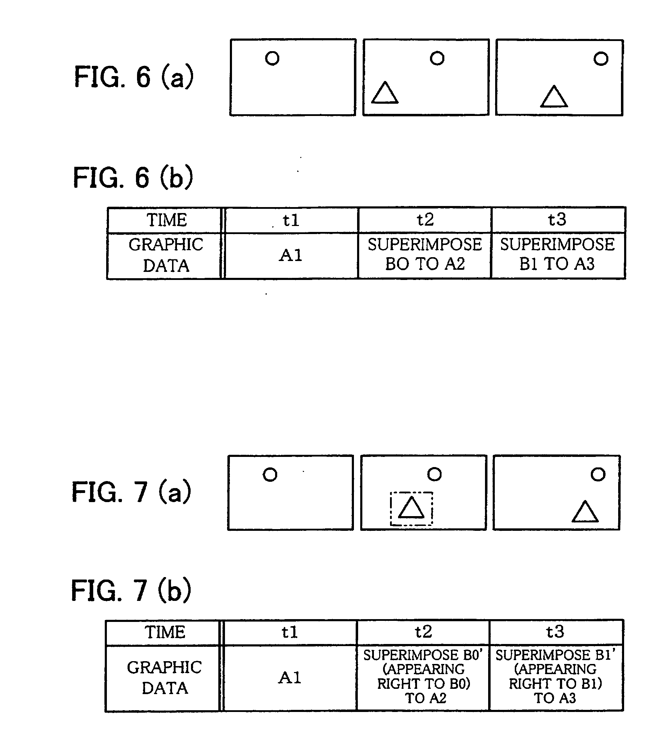

Suppose that while watching animation A on the display section 14, the operator inputs a command for a superimposition operation through the input section 15 at, for example, time t2. Animation A stops immediately upon the command input, and the editing section 16 superimposes the object data set B0 of animation B at time τ0 onto the object data set A2 of animation A at time t2 and the object data set B1 of animation B at time τ1 onto the object data set A3 of animation A at time t3, as shown in Figure 6(b). Figure 6(a) shows a synthetic display produced in this manner. Although the first frame of animation B is displayed on the display section 14 in this example, any representative image specified by the operator may be displayed.

An option may be given to the user whereby the user can specify, upon the superimposition at time t2, in which position animation B will appear in animation A. When this is the case, the operator can superimpose animation B in a desired position onto animation A by moving a virtual rectangle drawn around animation B.

An example of a synthetic display is shown in Figure 7(a) in which animation B is specified to appear in a position horizontally right to the original position. In this case, the data sets for animation B which is to be superimposed are designated B0', B1' as shown in Figure 7(b).

In the example, the animated object data is in two-dimensional bitmap form, and sequential images are drawn from that data to produce an animated image display. When the object data contains only that of key frames, a different process is employed to produce an animated image display; sequential images are drawn by interpolating subframes. Details follow.

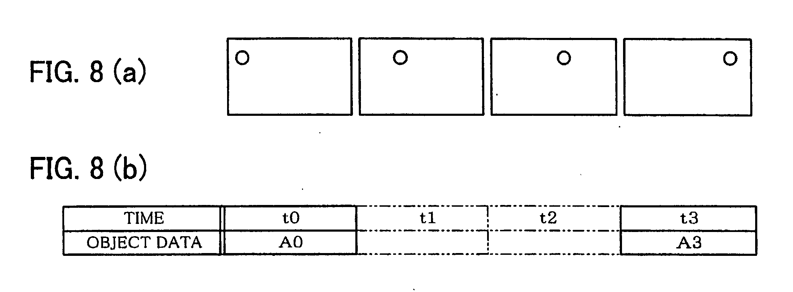

Suppose that animation A is a circle moving on screen sequentially from left to right as illustrated in Figure 8(a) and that the first and last images in Figure 8(a) are the only key frames involved; the second and third frames are subframes which we will produce by interpolation. The data for animation A, as shown in Figure 8(b), contains the object data set A0 from which the first image is displayed at time t0 and the object data set A3 from which the last image is displayed at time t3.

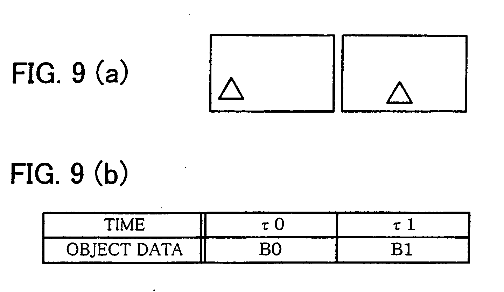

Similarly to the animation in Figure 5(a), animation B is composed of two key frames as illustrated in Figure 9(a). Accordingly, the data for animation B, as shown in Figure 9(b), contains the object data sets B0, B1 from which the two key frames are displayed at time τ0 and τ1 respectively.

Suppose that the operator, while watching animation A replayed on the display section 14, enters an instruction for a superimposition operation at time t1 through the input section 15. Animation B will accordingly be superimposed on animation A at times t1, t2.

Here, it should be noted that the data for animation A, as shown in Figure 8(b), contains nothing more than the object data set A0 for time t0 and the object data set A3 for time t3. To put differently, the data for animation A contains no object data for times t1, t2.

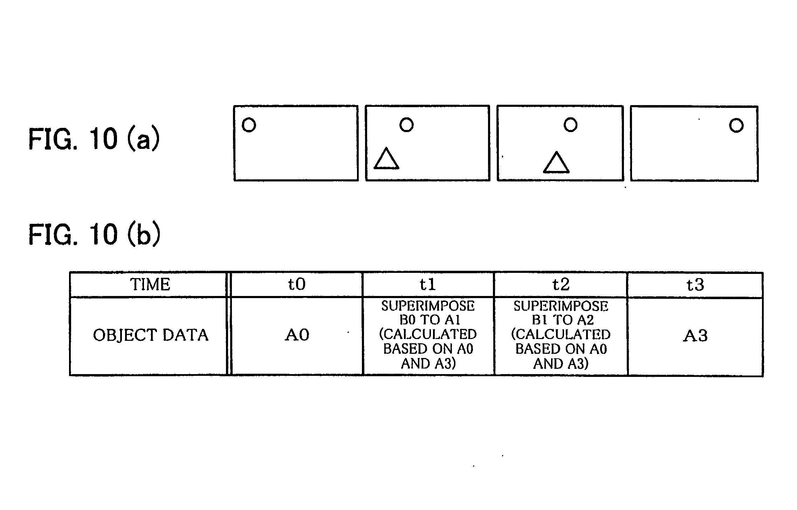

Accordingly, to carry out superimposition at times t1, t2 as mentioned above, interpolation is carried out first to calculate the object data sets A1, A2 for times t1, t2 onto which the object data sets B0, B1 for animation B are superimposed. Results are illustrated in Figure 10(b).

Optionally, an additional arrangement may be made to allow stipulation where to superimpose animation B, as described in the foregoing in reference to Figures 7(a), 7(b).

The editing operation so far has only dealt with superimposition of animation. Following is a description on insertion of animation.

Suppose that animation A is the animation illustrated in Figures 4(a), 4(b) and animation B is the animation illustrated in Figures 5(a), 5(b) and also that animation B is inserted in animation A at time t2.

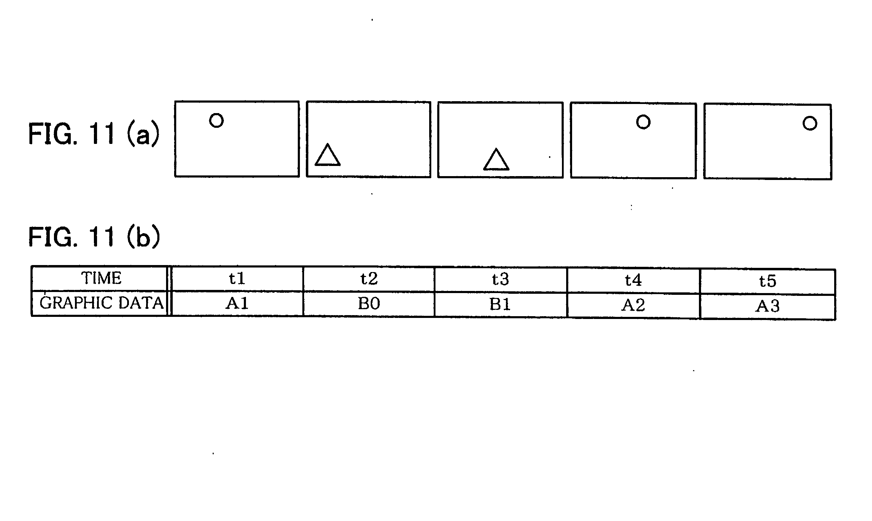

Accordingly, as shown in Figure 11(b), a display is produced from the object- data set A1 at time t1, the object data set B0 at time t2, the object data set B1 at time t3, the object data set A2 at time t4, the object data set A3 at time t5. Resulting, edited animation is illustrated in Figure 11(a).

As could be understood from the foregoing, with animation B being inserted to animation A as a result of the editing, the replay time of the entire animation equals the sum of the replay times of individual animations A, B, because after the inserted part is replayed, the replay sequence is back to animation A of which remaining images are replayed subsequently.

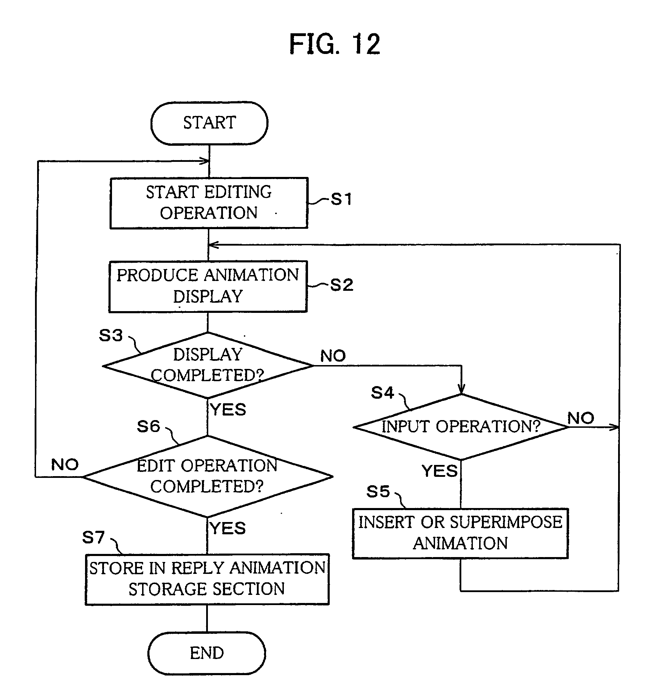

Figure 12 is a flow chart describing procedures to implement the editing operation. The procedures start with step S1 in which the operator begins the editing operation, which causes animation A stored in the incoming animation storage section 12 to be displayed on the display section 14 in step S2.

In step S3 it is determined whether the replay of animation A is completed. If it is determined that the replay is not completed yet (thus taking the NO path in step S3), it is determined in step S4 whether the operator has made any input operation. If it is determined that the operator has made an input operation (thus taking the YES path in step S4), as mentioned earlier, the editing section 16 inserts or superimposes animation B stored in the added animation storage section 13 to animation A in replay in step S5. After that, the procedures return to step S2. Conversely, if it is determined that no input has been made, (thus taking the NO path in step S4), the procedures return to step S2.

If it is determined otherwise in step S3, i.e., that the replay of animation A is completed (thus taking the YES path in step S3), it is determined in step S6 whether the editing operation is completed. If it is determined that the editing operation is completed (thus taking the YES path in step S6), edited animation data is stored n the reply animation storage section 17 in step S7. Conversely, it is determined that the editing operation is not completed yet (thus taking the NO path in step S6), that is, if the operator does not like edited animation, the procedures return to step S1 to start the editing operation again.

Preferably, an arrangement should be made to allow the operator to start the second and succeeding rounds of the editing operation selectively either from raw, unedited data or from the data edited in a previous round of the operation.

As described so far, the present invention can provide the animated email communications device 1 with an animation transmission function with a function to add animation B to incoming animation A at any given timing and position through simple operation, which enables the operator to produce an animated email reply as easily and quickly as a text-based email message.

### [Embodiment 2]

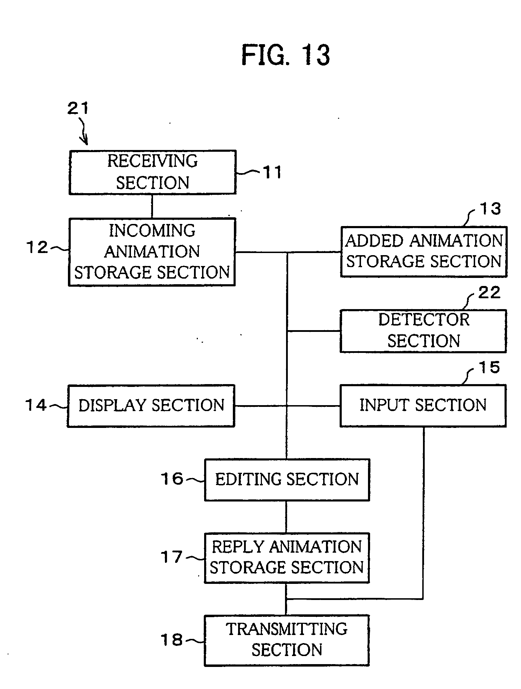

The following will describe another embodiment in accordance with the present invention in referring to Figures 13-19. Here, for convenience, members of the present embodiment that have the same arrangement and function as members of embodiment 1, and that are mentioned in that embodiment are indicated by the same reference numerals and description thereof is omitted.

In embodiment 1, for the sake of simple description, animations A, B were circle and triangular, which are elementary geometry, in motion. In contrast, the present embodiment presents examples of various animated character images so as to exploit an entertaining aspect of animated email for which animation is original meant.

Accordingly, the added animation storage section 13 stores data of multiple character images to provide options of animation B to be added from which the operator can choose one that matches incoming animation A through the input section 15. The operator can hence insert or superimpose animation that best suits the receiving end or conveys feelings of the operator.

Figure 13 is a block diagram showing a functional structure of an animated email communications device 21 of embodiment 2 in accordance with the present invention. The animated email communications device 21 is identical to the counterpart described in embodiment 1 in reference to Figure 1, except for the inclusion of a detector section 22. Another difference lies in that the animated email communications device 1 of embodiment 1 allows the recipient to edit any temporal and positional part of the animation and the animated email communications device 21 of the present embodiment allows the sender of animated email to designate in advance which temporal and positional part of the animation should be edited.

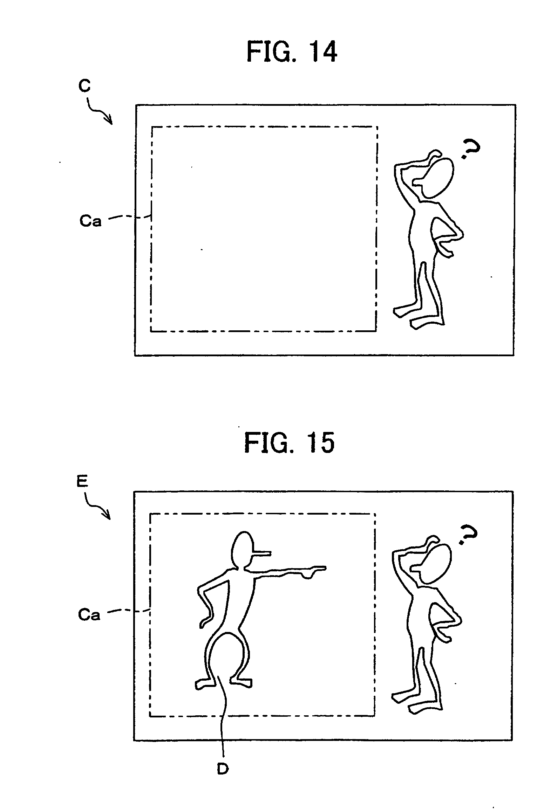

Before sending animation C, the sender draws a rectangle (indicated by "Ca" in Figure 14) to designate which part of the frame he/she wants the receiving end to edit. As a result, the data for animation C includes edit region designation data representative of the frame and position thus designated.

As the detector section 22 reads the edit region designation data while the display section 14 at the receiving end is displaying animation C, the replay is halted when a point in time is reached at which the sender designated editing. Then, a dotted rectangle Ca, for example, appears on screen to prompt the recipient to edit animation C. The recipient either inserts or superimposes animation D in the rectangle Ca, an edit marking, as shown in Figure 15 before transmitting resultant animation E.

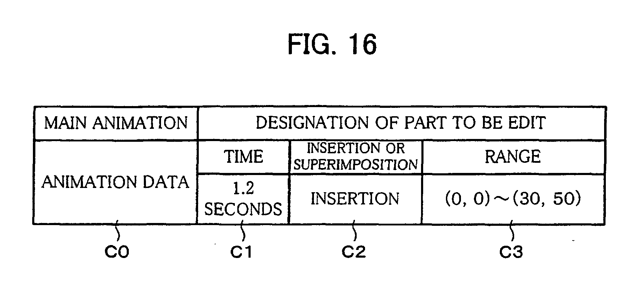

The transmitted animation data has a structure shown in Figure 16, for example. To be specific, an animation data set C0 precedes those data sets that represent an edited part: namely, an edit timing designation data set C1, an indicator data set C2 for specifying either insertion or superimposition, and a rectangular region data set C3 (the coordinates of a pair of opposite vertices connected by a diagonal in the example of Figure 16) for the insertion or superimposition of animation.

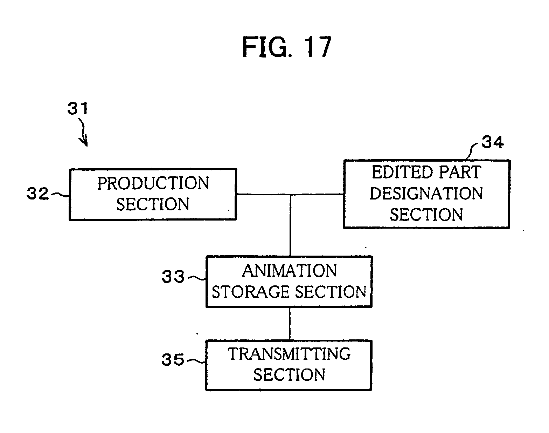

The animated email communications device 31 at the transmitting end includes, as shown in Figure 17, at least a production section 32, an animation storage section 33, an edited part designation section 34, and a transmitting section 35. The animated email communications device 31 at the transmitting end has an identical basic hardware structure to that of the animated email communications device 1 or 21. In other words, the animated email communications device 31 is realized by a personal computer, mobile data terminal, or other data processing device executing an animated email communications program for a transmitting end. These kinds of data processing devices have, for example, a CPU and RAM, to which RAM the animated email communications program is loaded to enable the CPU to carry out operations to execute the program. The animation communications program for a transmitting end can be installed in the data processing device in similar manners to the animated email communications device 1.

The transmitting section 35 is provided as a communications interface in the animated email communications device 31. Examples of such a communications interface include a communications COM port, modem, TA (Terminal Adaptor), LAN card, wireless antenna.

The animation storage section 33 is provided as storage means in the animated email communications device 31. The storage means is realized by a RAM to execute the program and by a hard disk, flash EEPROM, or other nonvolatile memory to store the data.

The production section 32 and the edited part designation section 34 are blocks realized by the execution of the animated email communications program. The production section 32 and the edited part designation section 34 will be described later in detail in regard of operations thereof.

The animated email communications device 31 includes a display section which produces a display related to various operations and an input section which enables various input operations, though neither are shown in Figure 17.

The blocks shown in Figure 17 operate in tandem with the benefit of the animated email communications program, OS, and the like.

The production section 32 produces the animation data set C0 to be transmitted. The animation data set C0 produced by the production section 32 is stored in the animation storage section 33. Using the edited part designation section 34, the sender subsequently designates edit region designation data, such as a timing, a selection between insertion or superimposition, and an edit position, which enables the receiving end to edit the animation with respect to the animation data set C0 stored in the animation storage section 33. These steps add the data sets C1-C3 as edit region designation data to the animation data set C0 which is transmitted from the transmitting section 35.

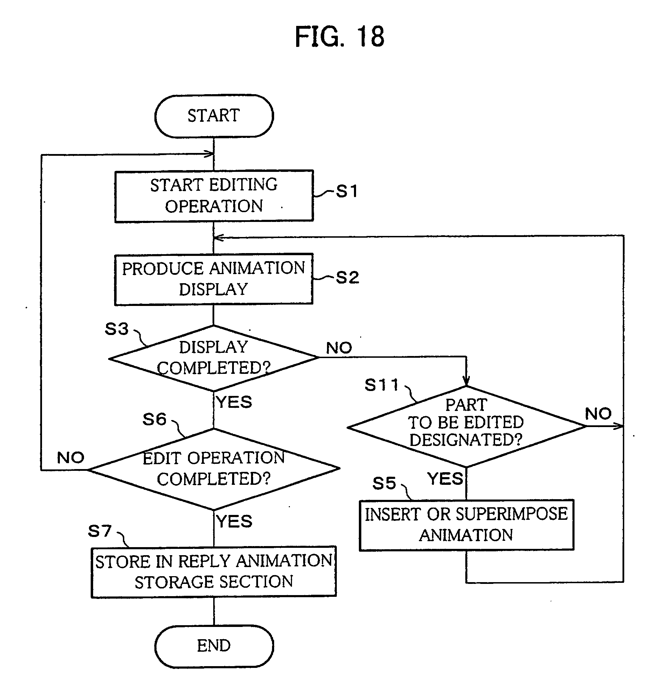

Figure 18 is a flow chart describing procedures to implement the editing operation. Identical steps to those in Figure 12 are assigned the same numerals. Note that step S4 is replaced with step S11 in this operation.

Specifically, if it is determined in step S3 that the replay of animation C is not completed yet (thus taking the NO path in step S3), it is checked in step S11 whether there is data representative of an edited part designation. If there is one (thus taking the YES path in step S11), the replay of animation C is halted in step S5 to prompt the recipient to edit animation C, and the recipient either inserts or superimposes animation D.

With the structure, the sender can prompt the recipient of animated email to edit the image and also can convey desired editing contents, such as an insertion timing and insertion position.

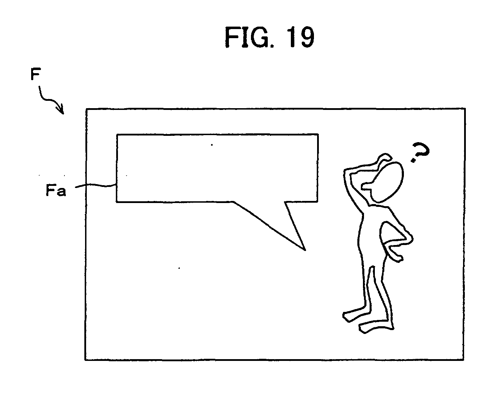

Note that it is not only animation, but also text, that is inserted or superimposed to the part designated for editing. For example, as shown in Figure 19, a balloon Fa may be transmitted in animation F as the part designated for editing to prompt the recipient to write a message therein. When this is the case, a data set is provided after the animation data set C0 in Figure 16 to distinguish between animation and text which is to be either inserted or superimposed.

### [Embodiment 3]

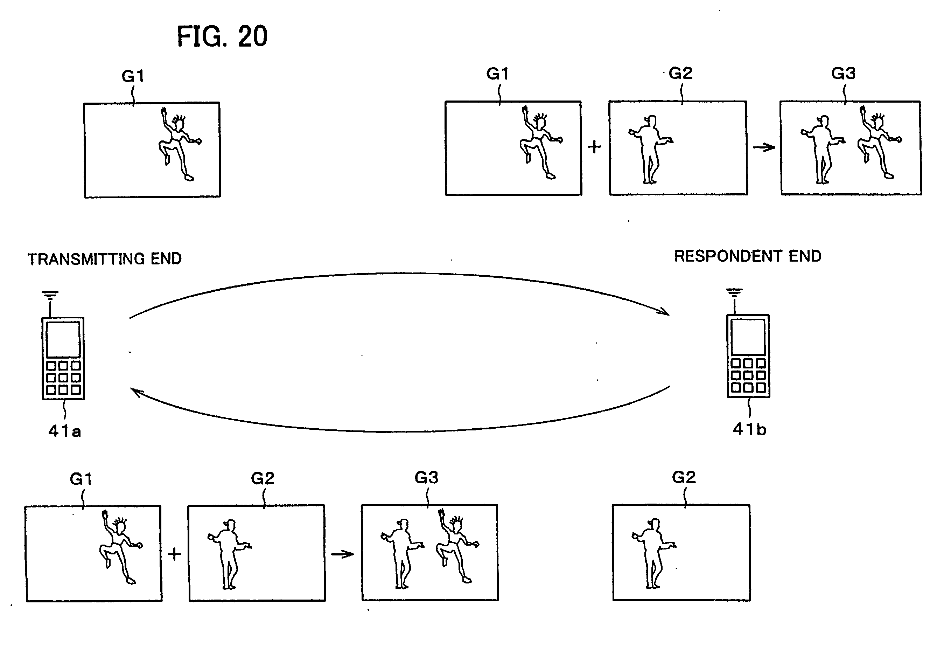

The following will describe another embodiment in accordance with the present invention in reference to Figures 20-22. Those members of the present embodiment that have the same arrangement and function as members of previous embodiments are indicated by the same reference numerals, and description thereof is omitted.

Figure 20 is a drawing illustrating operations of an animated email communications device 41 of the present embodiment, in which an animated email communications device of the transmitting end is identified as 41a and an animated email communications device of the respondent end is identified as 41b. The animated email communications device 41 of the present embodiment is adapted so that the animated email communications device 41b of the respondent end does not send all the edited animation data, but sends only that data which is representative of differences between the incoming, original animation data and the edited animation data, back to the animated email communications device 41a of the transmitting end. The structure reduces workload on the communications network, because animation data is relative large in comparison to text data.

Referring to Figure 20, as the animation data set -identified by a reference symbol G1 is transmitted from the transmitting end, the animation data set identified by a reference symbol G2 is either superimposed or inserted at the respondent end as mentioned above; the animation data set identified by a reference symbol G3 is hence produced. However, the edited animation data set G3 is not transmitted as it is: only the animation data set G2 is transmitted which is representative of differences from the original animation data set G1 transmitted from the transmitting end. Meanwhile, at the transmitting end, the outgoing animation data set G1 is stored, and the incoming animation data set G2 is either superimposed or inserted to produce the animation data set G3. Thus, an identical animation display is produced at the transmitting and respondent ends.

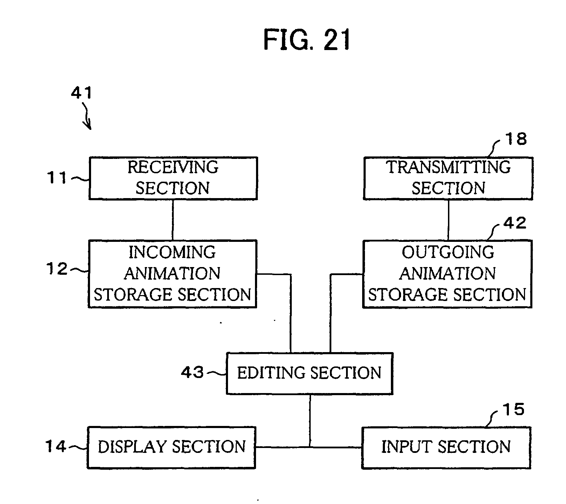

Figure 21 is a block diagram showing a functional structure of the animated email communications device 41. The animated email communications device 41a of the transmitting end stores the outgoing animation data set G1 in an outgoing animation storage section 42 and transmits the data set G1 from the transmitting section 18. The incoming animation data set G2 as a reply is received by the receiving section 11 and stored in the incoming animation storage section 12. The editing section 43 either superimpose the data sets G1 and G2 or inserts the data set G2 to the data set G1 to produce the animation data set G3 which is displayed on the display section 14.

In the animated email communications device 41b of the respondent end, the animation data set G1 is received by the receiving section 11 and stored in the incoming animation storage section 12. Responding to an input operation by the operator through the input section 15, the editing section 43 either superimposes or inserts the animation data set G2 stored in the outgoing animation storage section 42 to the animation data set G1. The produced animation data set G3 is displayed on the display section 14. Thereafter, the transmitting section 18 sends back the animation data set G2 selected by the operator through the input section 15. Thus, only the animation data set G2, which is a differential data set, is transmitted, and the display sections 14 of both ends can produce an identical animation display.

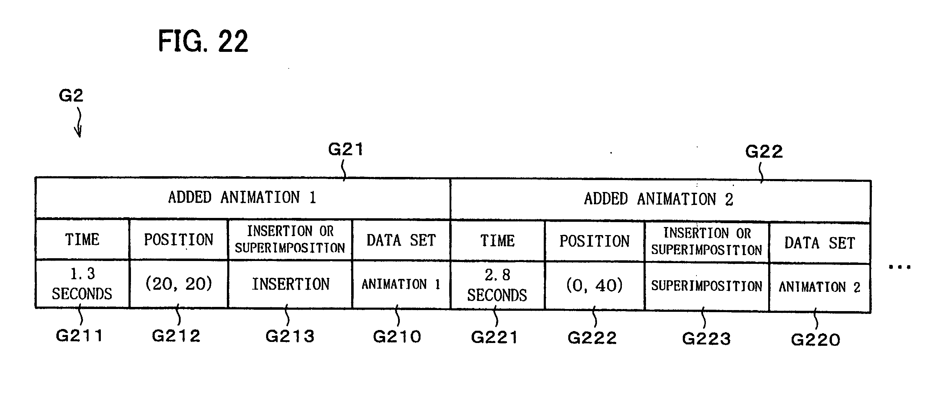

Figure 22 is a drawing showing a concrete example of the animation data set G2 which is a differential data set. The animation data set G2 contains four kinds of data sets: timing data sets G211, G221, ...; position data sets G212, G222, ...; indicator data sets G213, G223 for specifying whether the addition is carried out in the form of insertion or superimposition; and added animation data sets G210, G220, ..., in a manner to correspond to the respective added animation data sets G21, G22, .... The editing section 43 in the animated email communications device 41a of the transmitting end either inserts or superimposes the incoming animation data set G2 at a timing and position as specified by the animation data set G2.

With the structure, the animation data set G2 transmitted back to the transmitting end is the edited image minus the incoming animation data set G1, and the transmitting and respondent ends can produce a common animation display by individually superimposing or inserting the animation data sets G1, G2. The structure thus reduces the transmission size of animation data which is relative large in comparison to text data, and hence workload on the communications network.

### [Embodiment 4]

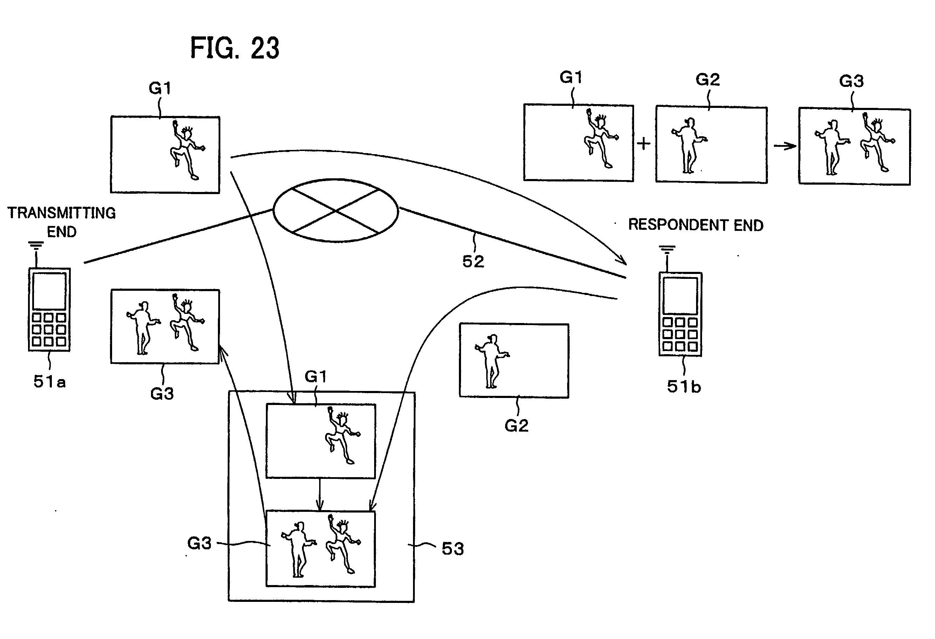

The following will describe another embodiment in accordance with the present invention in reference to Figure 23. Those members of the present embodiment that have the same arrangement and function as members of previous embodiments are indicated by the same reference numerals, and description thereof is omitted.

Figure 23 is a drawing illustrating operations of an animated email communications device 51 of the present embodiment, in which an animated email communications device of the transmitting end is identified as 51a and an animated email communications device of the respondent end is identified as 51b. In the system including the animated email communications device 51, a communications line 52 is provided with a server device 53, and the editing operation, such as superimposition or insertion, that is to be carried out by the animated email communications device 51a of the transmitting end is actually carried out by the server device 53.

The animation data set G1 from the transmitting end is transmitted via the server device 53 to the respondent end and also stored in the server device 53. The server device 53 either superimposes or inserts the reply animation data set G2 to the animation data set G1 read from internal storage to produce and transmit the animation data set G3 to the transmitting end.

The structure reduces the amount of data carried over an upbound part of the communications line 52, i.e., the line carrying data from the animated email communications device 51b of the respondent end to the server device 53.

If both the transmitting and respondent ends transmit back and forth preproduced animation, the exchange of animation by email is facilitated as in a case when email templates are used. If the animated email communications devices 51 of the transmitting and respondent ends store the same preproduced animation library, simply exchanging code data representing individual pieces of animation results in practice the exchange of that piece of animation by email. When the latter is the case, since the code data contains nothing more than a content to specify a particular piece of animation data, the size of data, and hence the amount of transmitted data, can be greatly reduced in comparison to animation data.

As detailed so far, a graphic data processing device in accordance with the present invention is structured to include:
first storage means for storing a first graphic data set produced in advance;
receiving means for receiving a graphic data set over a network;
second storage means for storing a second graphic data set received by the receiving means;
input means for receiving an input from the operator;
display means for displaying a graphic data set from the second storage means; and
edit means for inserting or superimposing the first graphic data set to the second graphic data set at an on-screen position designated through the input means and at a time when the input means receives an input while the display means is displaying the second graphic data set, so as to cause the display means to produce a display.

Another graphic data processing device in accordance with the present invention may be structured as in the foregoing and adapted so that: the first storage means stores a plurality of first graphic data sets; and any one of the plurality of first graphic data sets is selectable through the input means.

With the structure, a first graphic data set can be selected which matches the received second graphic data set. The operator can hence insert or superimpose an image that suits the recipient end or conveys feelings of the operator.

Another graphic data processing device in accordance with the present invention may be structured as in the foregoing and adapted so that the device further includes third storage means for storing a third graphic data set edited by the edit means; and transmitting means for transmitting the third graphic data set to a destination, so as to exchange an edited image with the destination connected by a network.

With the structure, a reply edited image can be sent back to a destination like an email reply.

Another graphic data processing device in accordance with the present invention may be structured as in the foregoing and adapted so that an edit marking prompting a recipient to insert by means of the first graphic data set can be attached to the second graphic data set.

With the structure, the sender can prompt the recipient to edit the image by attaching an edit marking, such as a frame indicating where an insertion should be made, and also can convey desired edit contents, such as an insertion timing and position.

Another graphic data processing device in accordance with the present invention may be structured as in the foregoing and adapted so that the edit means produces a difference between an edited graphic data set and the second graphic data set as a third graphic data set and the display means produce a display by superimposing a received differential data set to the transmitted graphic data set.

With the structure, the third graphic data set sent back as a reply to the original sender is the edited image minus the incoming second graphic data set, and both ends produce an image display by individually superimposing the received differential data set to the transmitted graphic data set. Therefore, the communications network is subjected to a reduce load in transmitting a relatively large amount of graphic data.

A method of processing graphic data in accordance with the present invention includes the steps of: storing a first graphic data set produced in advance; storing a second graphic data set received over a network; displaying the second graphic data set; and in response to an input operation, inserting or superimposing the first graphic data set at a position in the second graphic data set as designated by the input operation to produce a display.

Another method of processing graphic data in accordance with the present invention includes those steps defined above and further includes the step of transmitting the third graphic data set produced by means of the insertion or superimposition to a destination, so as to exchange an edited image with the destination connected by a network.

With the method, an edited image can be sent as a reply to a destination like the email reply.

Another method of processing graphic data in accordance with the present invention includes those steps defined above and further includes the step of attaching, to the second graphic data set before the transmission thereof, an edit marking prompting a recipient to insert by means of the first graphic data set.

With the method, the sender can prompt the recipient to edit the image by attaching an edit marking, such as a frame indicating where an insertion should be made, and also can convey desired edit contents, such as an insertion timing and position.

Another method of processing graphic data in accordance with the present invention includes those steps defined above and further includes the steps of preparing a difference between the edited graphic data set and the second graphic data set upon transmission and superimposing the received differential data set to the transmitted graphic data set upon reception.

With the method, the third graphic data set sent back as a reply to the original sender is the edited image minus the incoming second graphic data set, and both ends produce an image display by individually superimposing the received differential data set to the transmitted graphic data set. Therefore, the communications network is subjected to a reduced load in transmitting a relatively large amount of graphic data.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

In a graphic data processing device in accordance with the present invention, first storage means stores a first time-series graphic data set produced in advance and second storage means stores a second time-series graphic data set received by receiving means. The operator can carry out an operation to insert or superimpose the first time-series graphic data set at a point in time by designating the point in time in the second time-series graphic data set through input means. Therefore, when the time-series graphic data is received, the operator can easily produce a time-series graphic data set as a reply by quoting the received time-series graphic data set.

## Claims

1. A graphic data processing device, comprising:
first storage means for storing a first graphic data set produced in advance;
receiving means for receiving a graphic data set over a network;
second storage means for storing a second graphic data set received by the receiving means;
input means for receiving an input from the operator;
display means for displaying a graphic data set from the second storage means; and
edit means for inserting or superimposing the first graphic data set to the second graphic data set at an on-screen position designated through the input means and at a time when the input means receives an input while the display means is displaying the second graphic data set, so as to cause the display means to produce a display.

2. A graphic data processing device, comprising:
first storage means for storing a first time-series graphic data set produced in advance;
receiving means for receiving a time-series graphic data set over a network;
second storage means for storing a second time-series graphic data set received by the receiving means;
input means for receiving an input from the operator; and
edit means for carrying out an operation to insert or superimpose the first time-series graphic data set to the second time-series graphic data set,
wherein
the edit means produces a third time-series graphic data set by carrying out the operation at a point in time in the second time-series graphic data set as designated by the input made through the input means.

3. The graphic data processing device as defined in claim 2, wherein
the edit means carries out the operation at a position in the second time-series graphic data set as designated by the input made through the input means.

4. The graphic data processing device as defined in either one of claims 2 and 3, further comprising
display means for displaying at least any one of the first time-series graphic data set, the second time-series graphic data set, and the third time-series graphic data set.

5. The graphic data processing device as defined in either one of claims 1 and 2, wherein:
the first storage means stores a plurality of first graphic data sets; and
the edit means implements the insertion or superimposition based on one of the plurality of first graphic data sets which is selected through the input means from the plurality of first graphic data sets stored in the first storage means.

6. The graphic data processing device as defined in either one of claims 1 and 2, further comprising
transmitting means for transmitting the third time-series graphic data set over a network to any given destination.

7. The graphic data processing device as defined in either one of claims 1 and 2, further comprising
third storage means for storing the third time-series graphic data set.

8. The graphic data processing device as defined in claim 6, wherein
the transmitting means transmits the third time-series graphic data set to an origin of the second time-series graphic data set used in producing the third time-series graphic data set.

9. The graphic data processing device as defined in either one of claims 1 and 2, wherein
the edit means produces a differential data set between the third time-series graphic data set and the second time-series graphic data set.

10. The graphic data processing device as defined in claim 9, further comprising
transmitting means for transmitting the differential data set to an origin of the second time-series graphic data set.

11. The graphic data processing device as defined in either one of claims 1 and 2, further comprising:
production means for producing a fourth time-series graphic data set for transmission in response to an instruction from the operator; and
transmitting means for transmitting the fourth time-series graphic data set over a network to any given destination.

12. The graphic data processing device as defined in claim 11, wherein
the production means incorporates, to the fourth time-series graphic data set, a data set, designating a part to be edited, which enables the insertion or superimposition at the destination of the fourth time-series graphic data set.

13. The graphic data processing device as defined in claim 11, further comprising:
fourth storage means for storing the fourth time-series graphic data set.

14. The graphic data processing device as defined in claim 13, wherein:
if the time-series graphic data set received by the receiving means is a time-series graphic data set for reply transmission from the destination to which the fourth time-series graphic data set is transmitted by the transmitting means and a differential data set between the fourth time-series graphic data set and the time-series graphic data set edited at the destination, the edit means superimposes the differential data set and the fourth time-series graphic data set stored in the fourth storage means and includes display means for displaying a resultant time-series graphic data set.

15. A method of processing graphic data set, comprising the steps of:
storing a first time-series graphic data set produced in advance;
storing a second time-series graphic data set received over a network; and
in response to an input operation, inserting or superimposing the first graphic data set at a point in time in the second time-series graphic data set as designated by the input operation to produce a third time-series graphic data set.

16. The method of processing graphic data set as defined in claim 15, wherein
the first time-series graphic data set is inserted or superimposed at a position in the second time-series graphic data set as designated by the input made by an input operation.

17. The method of processing graphic data set as defined in either one of claims 15 and 16, wherein
the third time-series graphic data set is transmitted over a network to a destination.

18. The method of processing graphic data set as defined in either one of claims 15 and 16, wherein
a fourth time-series graphic data set is produced for transmission in response to an instruction from the operator and transmitted over a network to any given destination.

19. The method of processing graphic data set as defined in claim 18, wherein
a data set, designating a part to be edited, which enables the insertion or superimposition at the destination of the fourth time-series graphic data set is incorporated to the fourth time-series graphic data set.

20. The method of processing graphic data set as defined in either one of claims 15 and 16, wherein
a differential data set between the third time-series graphic data set and the second time-series graphic data set is produced.

21. The method of processing graphic data set as defined in claim 20, wherein
the differential data set is transmitted to an origin of the second time-series graphic data set.

22. The method of processing graphic data set as defined in claim 18, wherein
the fourth time-series graphic data set is stored.

23. The method of processing graphic data set as defined in claim 22, wherein
if the received time-series graphic data set is a time-series graphic data set for reply transmission from the destination to which the fourth time-series graphic data set is transmitted and a differential data set between the fourth time-series graphic data set and the time-series graphic data set edited at the destination, the differential data set and the fourth time-series graphic data set are superimposed and a resultant time-series graphic data set is displayed by display means.

24. A graphic data processing program by which a computer implements the method of processing graphic data as defined in any one of claims 15 through 23.

25. A storage medium for storing the graphic data processing program as defined in claim 24.
